# EUROPEAN PATENT SPECIFICATION

(11) **EP 2 914 030 B1**
(45) Date of publication and mention of the grant of the patent: **28.03.2018**
(21) Application number: 13806973.7
(22) Date of filing: 20.08.2013
(51) Int. Cl.: H04W 76/04, H04W 52/02, H04W 36/08

(54) **DISCONTINUOUS RECEPTION (DRX) MODE PROCESSING METHOD, USER EQUIPMENT, AND BASE STATION**
VERARBEITUNGSVERFAHREN FÜR DISKONTINUIERLICHEN EMPFANGSMODUS (DRX), BENUTZERVORRICHTUNG UND BASISSTATION
ÉQUIPEMENT UTILISATEUR, STATION DE BASE ET PROCÉDÉ DE TRAITEMENT DE MODE DE RÉCEPTION DISCONTINU (DRX)

(30) Priority: 21.11.2012 CN 201210508998
(43) Date of publication of application: 02.09.2015
(73) Proprietor: ZTE Corporation, Shenzhen, Guangdong 518057 (CN)
(72) Inventor: WANG, Li, Shenzhen Guangdong 518057 (CN)
(74) Representative: D'Halleweyn, Nele Veerle Trees Gertrudis
(86) International application number: PCT/CN2013/081819
(87) International publication number: WO 2013/189378

(56) References cited:
- EP-A1- 1 944 985
- EP-A1- 2 157 830
- EP-A2- 1 915 010
- EP-A2- 1 944 923
- WO-A1-2007/148175
- CN-A- 101 656 978
- CN-A- 102 123 456
- CN-A- 102 256 321
- CN-A- 103 024 776
- US-A1- 2012 155 309

## Description

### Technical Field

The present invention relates to a discontinuous reception (DRX) mode processing technology, and in particular, to a DRX processing method, a user equipment and a base station.

### Background of the Related Art

In the Long Term Evolution (LTE) system, the DRX mode is defined for the user equipment (UE) to save power. In the DRX mode, the UE is not necessary to perform the PDCCH blind detection to every subframe, which provides the condition for shutting down the receiving circuit. Under the DRX mode, the active time and the non-active time exist alternatively, and the UE enters the non-active Time after leaving the Active Time. Under the DRX mode, the UE only needs to perform the PDCCH blind detection during the Active Time. The Active Time is determined according to the DRX parameter configured by the evolved base station (eNodeB) and the service scheduling situation. The Active Time is started according to the period, and it enters the Non-active Time when there is no service transmission and needs to wait until the next period to be able to enter the Active Time again.

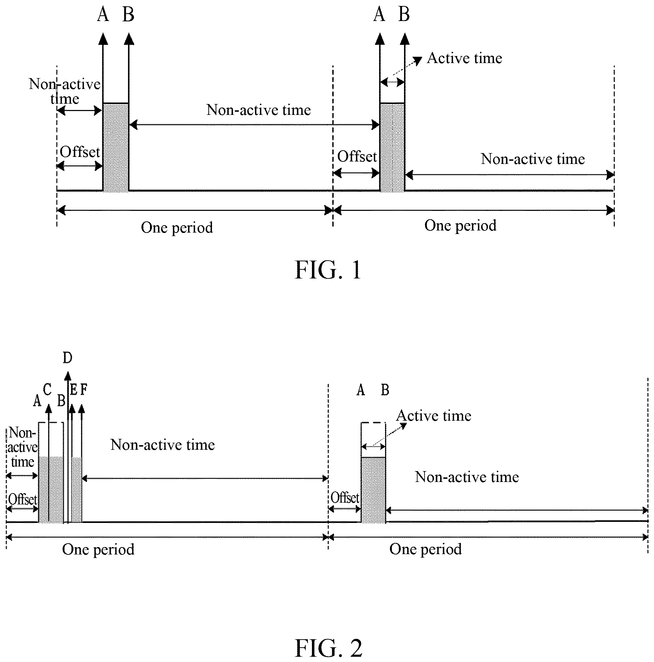

As shown in FIG. 1, under the DRX mode, when there is no service, the Active time and the non-active time appear alternatively, and the Active time is started according to the period. The UE receives the data issued by the base station only during the Active time. During the non-active time, the UE does not receive data issued by the base station, and does not detect the PDCCH. It is the Active time between the two points A and B, which is the time that the onduration timer configured by the base station runs, wherein, the A arrowhead represents to start or restart the onduration timer, and the B arrowhead represents that the onduration timer is overtime. The "offset" in the figure represents the offset within one DRX period at the startup time of the Onduration Timer.

As shown in FIG. 2, under the DRX mode, when there is the service, the time of the active time will be further lengthened, which is specifically the running time of the inactivity timer when the UE detects the PDCCH scheduled by the base station; the value of the inactivity timer is variable, and is 1 millisecond shortest.

Specifically, when the UE enters the non-active time, after the B arrowhead, when there are data to be sent, the uplink authorization can be applied to the base station through sending the Scheduling Request (SR), in order to send the uplink data. At the D arrowhead, the UE sends the SR to the base station; the uplink authorization of the base station (PDCCH with DCI0) is received at the C arrowhead and the E arrowhead, the E arrowhead time is the active time and is delayed to the F arrowhead (inactivity timer stop), then the UE enters the non-active time and does not receive the data issued by the base station until the next DRX period.

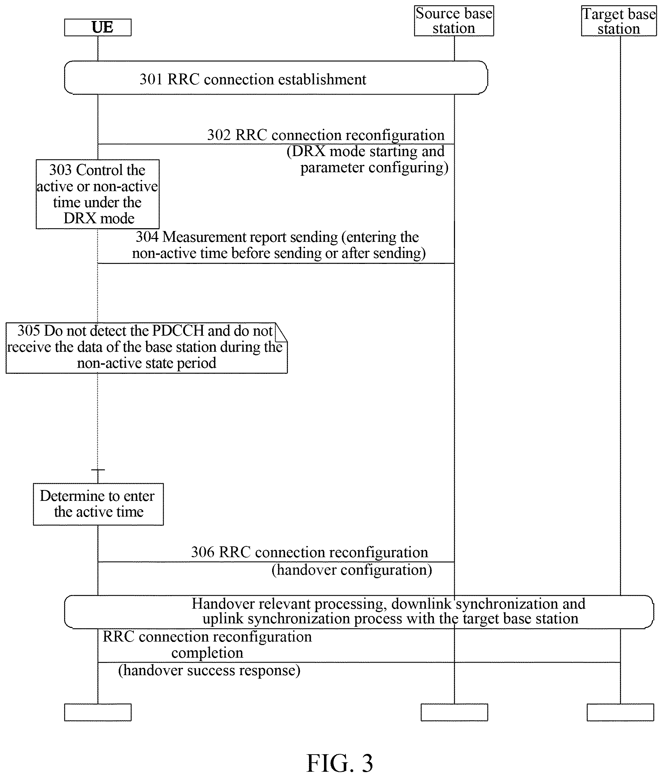

As shown in FIG. 3, the handover procedure under the DRX mode in the related art mainly includes the following steps.

In step 301: the UE sets up the RRC connection with the base station.

In step 302: the base station configures the service and the DRX mode parameter through the RRC reconfiguration process and starts the DRX mode.

In step 303: the UE determines to enter and exit the Active time according to the DRX mode parameter and the service scheduling situation of the base station.

In step 304: when the UE enters the non-active time period, the UE moves and enters the handover area, and sends the measurement report to the base station.

Alternatively, the UE moves and enters the handover area, and enters the Non-active time quickly after sending the measurement report to the base station.

In step 305: because the UE does not receive the data of the base station during the non-active time, the base station will not send the RRC reconfiguration and carry the handover configuration parameter after the active time is started next time.

In step 306: the UE receives the RRC reconfiguration after entering the active time again, finishes the handover processing procedure, and sends the RRC reconfiguration completion response to the target base station.

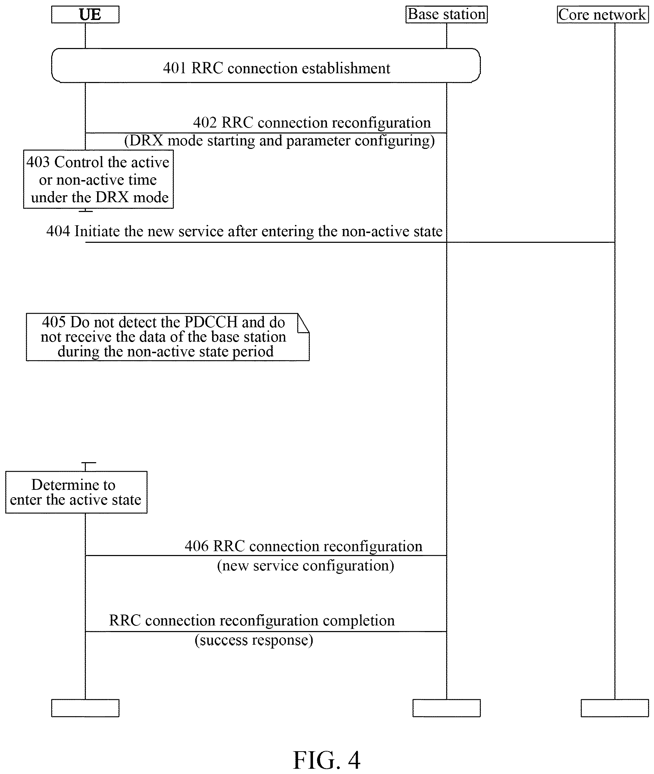

The new service initiation procedure under the DRX mode in the related art as shown in FIG. 4 mainly includes the following steps.

In step 401: the UE sets up the RRC connection with the base station.

In step 402: the base station configures the service and the DRX mode parameter through the RRC reconfiguration process and starts the DRX mode.

In step 403: the UE determines to enter and exit the Active time according to the DRX mode parameter and the service scheduling situation of the base station.

In step 404: when the UE enters the non-active time, the UE initiates the request to the core network (the core network, after processing the request, triggers the RRC reconfiguration by the base station to the UE through interacting information with the base station) when there is the new service that is initiated.

In step 405: because the UE does not receive the data of the base station during the non-active time, the base station will just send the RRC reconfiguration and carry the relevant parameter of the new service after the active time is started next time.

In step 406: the UE receives the RRC reconfiguration after entering the active time again, finishes the relevant reconfiguration procedure, and sends the RRC reconfiguration completion response to the base station.

In the related art, the DRX period can be up to 2.56 seconds the longest. Under some situations, it may appear that the UE does not detect the PDCCH during the time of more than 2 seconds, and also will not receive the service data and signaling issued by the eNodeB. When the user has the interactive service demands, has the immediate service interaction or the UE is moving and handover to the new cell, if the UE is in the Non-active Time and does not detect the PDCCH, it will be unable to receive the service signaling and data issued by the network side, which will degrade the user experience and even more the handover drop.

EP1944923A2 discloses a method for processing uplink data by DRX-mode terminal in mobile telecommunication system.

EP1915010A2 discloses a method for increasing the success rate of a handover of a connected mode UE while minimizing the power consumption of the UE during DRX operation in a mobile communication system.

EP2157830A1 discloses a method for dynamically indicating a UE to change a DRX status.

US2012155309A1 discloses a method for handover of terminal in a wireless communication system.

EP1944985A1 discloses a method for the support of a long DRX in an LTE active state in a wireless network.

### Content of the Invention

The technical problem that the embodiment of the present invention requires to solve is to provide a discontinuous reception mode (DRX) processing method, a user equipment and a base station, to solve the problem of the service delay or handover interrupt under the DRX mode.

In order to solve the above-mentioned technical problem, the following technical solution is adopted. In a first aspect of the invention, a discontinuous reception mode (DRX) processing method as defined by independent claim 1 is provided. In a second aspect of the invention, a user equipment (UE) as defined by independent claim 5 is provided. In a third aspect of the invention, a base station as defined by independent claim 9 is provided. Compared with the related art, by adopting the above-mentioned technical solution, the problem that the service data and signaling issued by the base station cannot be received in time during entering the non-active time under the DRX mode can be solved, thus being able to promote the user experience and avoiding the handover call drop, etc.

### Brief Description of Drawings

FIG. 1 is a DRX scene diagram that there is no service in the related art;
FIG. 2 is a DRX scene diagram that there is a service in the related art;
FIG. 3 is a handover procedure under the DRX mode in the related art;
FIG. 4 is a new service initiation procedure under the DRX mode in the related art;
FIG. 5 is a diagram of a discontinuous reception mode (DRX) processing method of example 1, which is not part of the present invention;
FIG. 6 is a diagram of a discontinuous reception mode (DRX) processing method of embodiment 2 of the present invention;
FIG. 7 is a diagram of a discontinuous reception mode (DRX) processing method of embodiment 3 of the present invention;
FIG. 8 is a DRX scene diagram that there is a service in the embodiment of the present invention (non-active time exiting);
FIG. 9 is a DRX scene diagram that there is a service in the embodiment of the present invention (active time keeping);
FIG. 10 is a handover procedure under the DRX mode in the embodiment of the present invention;
FIG. 11 is a new service initiation procedure under the DRX mode in the embodiment of the present invention;
FIG. 12-14 are structure diagrams of modules of user equipment (UE) in the embodiment of the present invention;
FIG. 15 is a module structure diagram of a base station in the embodiment of the present invention.

### Preferred Embodiments of the Present Invention

In order to make the skilled in the art understand the present invention much better and be able to implement, the embodiment of the present invention is described in detail with reference to the accompanying drawings hereinafter. However, the cited embodiments are not intended to limit the present invention. In the case of not conflicting, the embodiments in the present application and features in these embodiments can be combined with each other.

It can be understood that the embodiment described in the present text is only part of the embodiments of the present invention, while not all the embodiments. Based on the embodiment in the present invention, all other embodiments obtained by those skilled in the art without paying out the creative work should be embodied in the scope of the present invention.

### Example 1

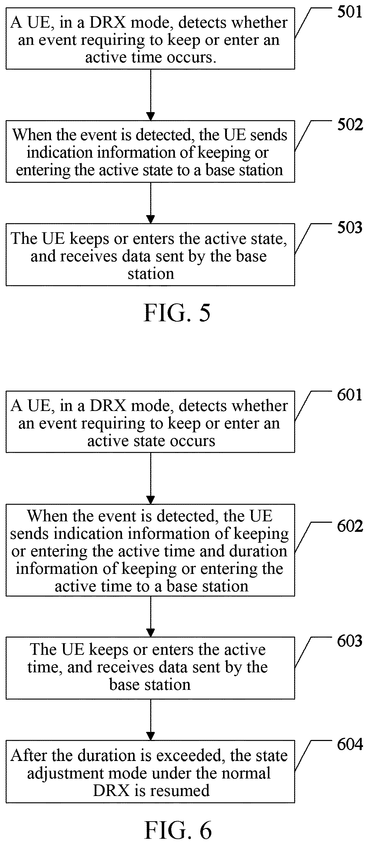

A discontinuous reception mode (DRX) processing method in example 1, which is not part of the present invention, includes step 501-step 503, as shown in FIG. 5.

In step 501, a user equipment (UE), in a DRX mode, detects whether an event requiring to keep or enter an active time occurs.

Whether it is required to keep or enter the active time, that is, whether to exit the discontinuous reception time temporarily, the UE can determine whether the corresponding event is occurred according to the service characteristics, and the event includes but not limited to the interactive service (urgent service) requirement or is in the handover area currently.

In step 502, when the event is detected, the UE sends indication information of exiting the DRX mode and keeping or entering the active time to a base station.

The indication information is sent, in a media access control message (medium access control protocol data unit, MAC PDU), in a format of MAC control elements.

In step 503, the UE exits the DRX mode and keeps or enters the active time, and receives data sent by the base station.

The UE is in the active time or the non-active time when sending the indication information, and continues keeping the active time or transfers from the non-active time to the active time after sending the indication information.

In this text, the UE continues keeping the active time or transfers from the non-active time to the active time after sending the indication information, which represents that the UE already exits the DRX mode, and the conversion from the active time to the non-active time is no longer controlled on the basis of the DRX mode.

After sending out an appointed duration of the indication information, the UE resumes a time adjustment mode under a normal DRX mode.

### Embodiment 2

A discontinuous reception mode (DRX) processing method in embodiment 2 of the present invention includes step 601-step 604, as shown in FIG. 6.

In step 601, a user equipment (UE), in a DRX mode, detects whether an event requiring to keep or enter an active time occurs.

The event includes but not limited to being in a handover area currently or requiring to initiate a urgent call.

In step 602, when the event is detected, the UE sends indication information of exiting the DRX mode and keeping or entering the active time and duration information of keeping or entering the active time to a base station.

The duration information is determined by the UE according to service characteristics or whether to switch over.

The indication information or the duration information is sent, in a media access control message (MAC PDU), in a format of MAC control elements.

The UE sends the indication information to the base station under the DRX mode, and sets a timer B with a duration L. Specifically, the indication information and/or the duration information is sent, in the media access control message (MAC PDU), in a format of MAC control elements.

In step 603, the UE exits the DRX mode and keeps or enters the active time, and receives data sent by the base station.

The above-mentioned indication information indicates to the base station that: the UE is in the Active Time period within the following L duration time, while will not enter the Non-active Time period.

When the base station receives the above-mentioned indication information sent by the UE, it is believed that the UE is in the Active Time period in the following L duration time, that is, it is believed that the UE will receive the data issued by the base station continuously.

The UE is in the active time or the non-active time when sending the indication information, and continues keeping the active time or transfers from the non-active time to the active time after sending the indication information.

The UE can determine the value of the duration L of the above-mentioned timer B according to the above-mentioned service characteristic and whether to switch over.

In step 604, after the duration is exceeded, the time adjustment mode under the normal discontinuous reception mode (DRX) is resumed.

The UE is set to be in the Active Time before the above-mentioned timer B is overtime, and detects the downlink scheduling of the base station (that is, PDCCH) continuously.

After the above-mentioned timer B is overtime, the UE resumes the normal DRX mode, and enters and exits the Active Time period according to the DRX mode parameter and the service scheduling situation of the base station.

### Embodiment 3

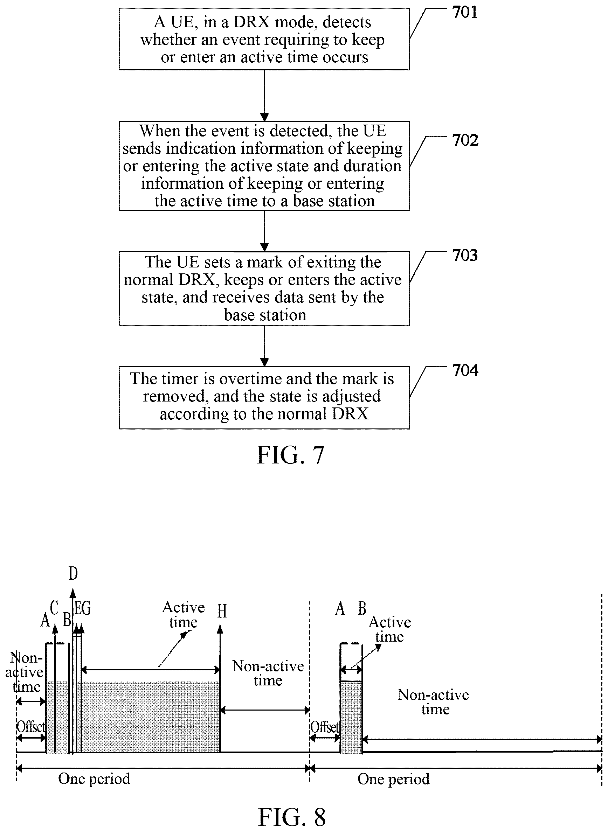

A discontinuous reception mode (DRX) processing method in embodiment 3 of the present invention includes step 701-step 704, as shown in FIG. 7.

In step 701, a user equipment (UE), in a DRX mode, detects whether an event requiring to keep or enter an active time occurs.

The event includes but not limited to being in a handover area currently or requiring to initiate a urgent call.

In step 702, when the event is detected, the UE sends indication information of exiting the DRX mode and keeping or entering the active time and duration information of keeping or entering the active time to a base station.

The duration information is determined by the UE according to service characteristics or whether to switch over.

The UE sends the indication information to the base station under the DRX mode, and sets a timer B with a duration L. Specifically, the indication information and/or the duration information is sent, in the media access control message (MAC PDU), in a format of MAC control elements.

The above-mentioned indication information indicates to the base station that: the UE is in the Active Time period within the following L duration time, while will not enter the Non-active Time period.

When the base station receives the above-mentioned indication information sent by the UE, it is believed that the UE is in the Active Time period in the following L duration time, that is, it is believed that the UE will receive the data issued by the base station continuously.

In step 703, the UE sets a mark of exiting the normal discontinuous reception mode (DRX), exits the DRX mode and keeps or enters the active time, and receives data sent by the base station.

The UE is in the active time or the non-active time when sending the indication information, and continues keeping the active time or transfers from the non-active time to the active time after sending the indication information.

In step 704: the timer is overtime and the mark is removed, and the time is adjusted according to the normal discontinuous reception mode (DRX).

The UE is set to be in the Active Time before the above-mentioned timer B is overtime, and detects the downlink scheduling of the base station (that is, PDCCH) continuously.

After the duration is exceeded, the time adjustment mode normal under the normal discontinuous reception mode (DRX) is resumed.

Alternatively, in the example 1, the mark of exiting the normal discontinuous reception mode (DRX) also can be set after sending the indication information, or the mark is removed after reaching the appointed duration, and then the time is adjusted according to the normal discontinuous reception mode (DRX).

The present invention, directed against the above-mentioned problem in the related art, provides the method for the UE to exit the discontinuous reception time, and enables the user under the discontinuous reception mode perform the service interaction in time and promote the dependability of the UE handover.

The method embodiments 2 and 3 of the present invention are described in detail by combining with the specific examples hereinafter.

As shown in FIG. 8, in the embodiment of the present invention, compared with FIG. 2, the UE sends the SR at the time of D, receives the uplink authorization of the base station at the time of E, and sends the indication information to the base station by utilizing the uplink authorization at the time of G, and with the indication information, the UE exits the non-active time (keeping in the active time) during a following period, and starts the timer B. At the time of H, the timer B is overtime, and the UE enters the non-active time again, until the starting moment of the active time of the next DRX period.

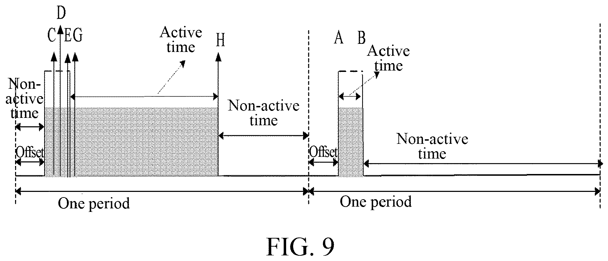

As shown in FIG. 9, in the embodiment of the present invention, the difference with FIG. 8 is that the sending of the SR of FIG. 8 is initiated during the non-active time period and the sending of the SR of FIG. 9 is initiated during the active time period. The further contrast is that, FIG. 8 indicates the scene that the UE exits the active time and keeps in the active time for some time when there is the service requirement; and FIG. 9 indicates that the UE maintains in the active time for some time while there is the service requirement, that is, does not enter the non-active time period according to the normal DRX mode.

It is obvious that, through the method of the embodiment of the present invention, it can exit the non-active time and keep the active time for some time, and can notify the base station to enable the understandings to the UE time by the UE and the base station reach an agreement. Further, the embodiment of the present invention exits from the non-active time and resumes continuously receiving the data of the base station. While, the related art does not have the mechanism and method.

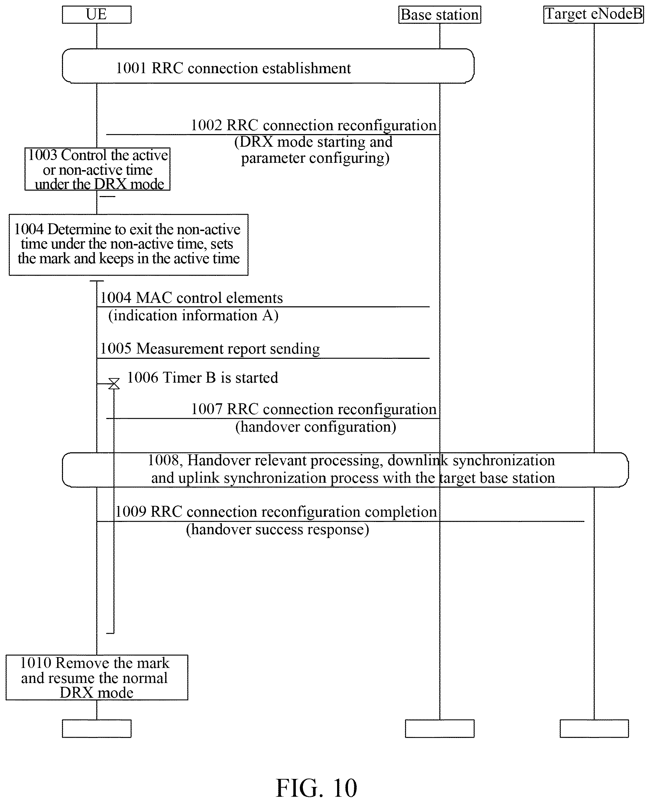

As shown in FIG. 10, after adopting the method of the embodiment of the present invention, the handover procedure under the DRX mode mainly includes the following step 1001-step 1010.

In step 1001: the UE sets up the RRC connection with the base station.

In step 1002: the base station configures the service and the DRX mode parameter through the RRC reconfiguration process and starts the DRX mode.

In step 1003: the UE determines to enter and exit the Active time according to the DRX mode parameter and the service scheduling situation of the base station.

In step 1004: when the UE enters the non-active time period, the UE moves and enters the handover area; the UE determines whether to exit the non-active time according to the measurement situation and sets the mark when exiting, and the UE sends the indication information to the base station.

In step 1005: the UE sends the measurement report to the base station.

In step 1006: the UE sets the timer B.

In step 1007: the base station receives the indication information of the UE, and knows that the UE keeps in the active time (that is, be able to receive the data of the base station continuously); the base station sends the RRC reconfiguration and handover.

In step 1008: the UE performs the handover process after receiving the RRC reconfiguration handover command.

In step 1009: the UE sends the RRC reconfiguration completion message to the target base station.

In step 1010: the timer B is overtime, and the UE removes the above-mentioned mark and resumes the normal DRX mode processing, that is, to determine exiting and entering the active time according to the DRX parameter and the service scheduling situation.

In the related art, as shown in FIG. 3, between the UE sending the measurement report to the base station and sending the RRC reconfiguration (handover), there is a segment of duration with the dotted line; which can be up to maximum more than 2 seconds according to the value of the DRX period. While in the continuous reception time, the time interval between the measurement report and the RRC reconfiguration is within dozens milliseconds. It may cause the failure of the handover process to delay 2 seconds, which initiates the rebuilding and needs longer time to resume the connection. Compared with the related art, the embodiment of the present invention can receive the RRC reconfiguration handover command issued by the base station in time after the UE sends the measurement report, and completes the handover process in time, which can avoid the lost connection in the handover process.

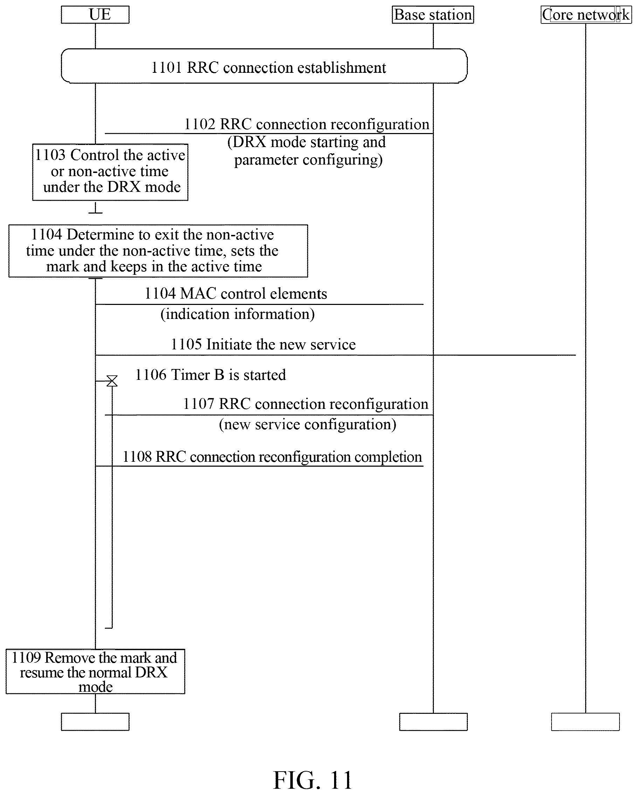

As shown in FIG. 11, after adopting the method of the embodiment of the present invention, the new service initiation procedure under the DRX mode mainly includes the following step 1101-step 1109.

In step 1101: the UE sets up the RRC connection with the base station.

In step 1102: the base station configures the service and the DRX mode parameter through the RRC reconfiguration process and starts the DRX mode.

In step 1103: the UE determines to enter and exit the Active time according to the DRX mode parameter and the service scheduling situation of the base station.

In step 1104: when the UE enters the non-active time period, the UE has a new service to initiate; the UE determines whether to exit the non-active time according to the service characteristic and the QOS requirement situation, and sets the mark when exiting, and the UE sends the indication information to the base station.

In step 1105: the UE sends the new service request to the core network through the base station.

In step 1106: the UE sets the timer B.

In step 1107: the base station receives the indication information of the UE, and knows that the UE keeps in the active time (that is, be able to receive the data of the base station continuously); and the base station sends the RRC reconfiguration.

In step 1108: the UE performs the handover process after receiving the RRC reconfiguration, and sends the RRC reconfiguration completion message to the base station.

In step 1109: the timer B is overtime, and the UE removes the above-mentioned mark and resumes the normal DRX mode processing, that is, to determine exiting and entering the active time according to the DRX parameter and the service scheduling situation.

In the related art, as shown in FIG. 4, between the UE initiating the new service to the base station and sending the RRC reconfiguration (the new service relevant configuration), there is a segment of duration with the dotted line; which can be up to maximum more than 2 seconds according to the value of the DRX period. More delay may cause the high layer retransmission, and further enlarge the delay and cause the user experience reduced.

Compared with the related art, the embodiment of the present invention can receive the RRC reconfiguration command issued by the base station in time after the UE initiates the new service request, and completes the reconfiguration process in time, which can avoid the user experience influenced by the DRX mode.

In order to realize the above-mentioned method, the embodiment of the present invention provides a user equipment (UE), including a detection module 1201, a sending module 1202, a time adjustment module 1203 and a data receiving module 1204, wherein,
the detection module 1201 is configured to: in a discontinuous reception mode (DRX), detect whether an event requiring to keep or enter an active time occurs;
the sending module 1202 is configured to: when the event is detected, send indication information of keeping or entering the active time to a base station;
the time adjustment module 1203 is configured to: adjust a time and keep or enter the active time therein after sending out the indication information; and
the data receiving module 1204 is configured to: receive data sent by the base station under an active time.

The event includes being in a handover area currently or requiring to initiate an interactive service.

The time adjustment module 1203 is further configured to: resume a time adjustment mode under a normal DRX mode after sending out an appointed duration of the indication information.

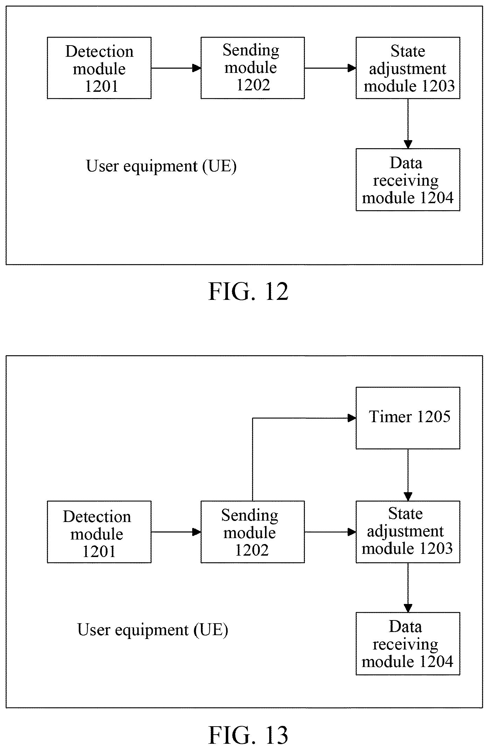

As shown in FIG. 13, different with the user equipment as shown in FIG. 12, the user equipment further includes a timer 1205, wherein, the sending module 1202 sends the duration information of keeping or entering the active time while sending the indication information; the timer 1205 is configured to: perform timing according to the duration information; and the time adjustment module 1203 is further configured to: resume the time adjustment mode under the normal DRX mode after the timer is overtime.

The duration information is determined by the UE according to service characteristics or whether to switch over.

Alternatively, the indication information or the duration information is sent, in a media access control message (MAC PDU), in a format of MAC control elements.

The UE is in the active time or the non-active time when sending the indication information, and continues keeping the active time or transfers from the non-active time to the active time after sending the indication information.

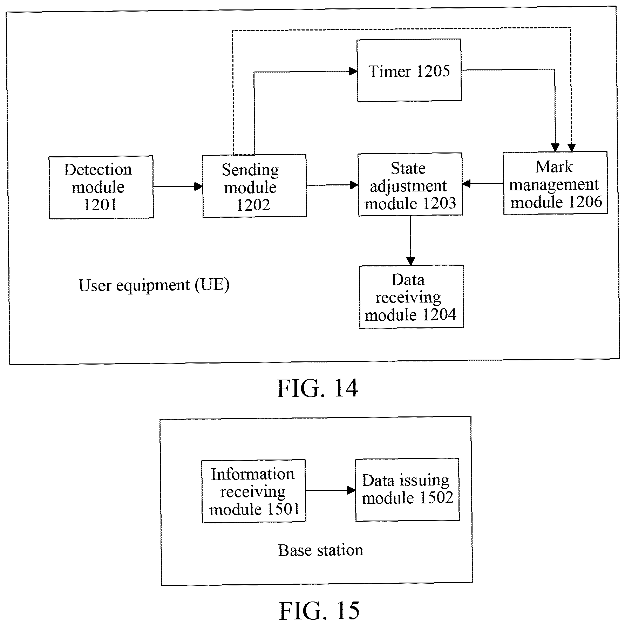

As shown in FIG. 14, different with the user equipment as shown in FIG. 12 or 13, the UE further includes a mark processing module 1206, wherein, the mark processing module 1206 is configured to: set a mark for exiting the normal DRX mode while the UE sends the indication information, and remove the mark after a timer is overtime or reaches the appointed duration; and the time adjustment module 1203 is further configured to: keep the active time when the mark exists, and adjust the time according to the normal DRX mode after removing the mark.

In order to realize the above-mentioned method, the present invention further provides a base station, including an information receiving module 1501 and a data issuing module 1502, as shown in FIG. 15, wherein:
the information receiving module 1501 is configured to: receive indication information of exiting a discontinuous reception mode (DRX) and keeping or entering an active time sent by a user equipment (UE) under the DRX mode; and
the data issuing module 1502 is configured to: issue data to the UE after receiving the indication information, wherein the data issuing module 1502 issues the data according to a normal DRX mode after beyond a duration corresponding to duration information sent by the UE, wherein the duration information is received by the information receiving module 1501.

The indication information or the duration information is sent, in a media access control message (MAC PDU), in a format of MAC control elements.

Compared with the related art, by adopting the method, the user equipment and the base station of the embodiment of the present invention, the problem that the service data and signaling issued by the base station cannot be received in time during entering the non-active time under the DRX mode can be solved, thus being able to promote the user experience and avoiding the handover call drop, etc.

The above description is only the preferred embodiments of the present invention and is not intended to limit the present invention. For those skilled in the art, the present invention can have various modifications and variations without departing from the scope of the appending claims of the present invention.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

The modules in the user equipment and the base station described in the embodiment of the present invention are only an example divided according to their functions. It can be understood that, under the condition of realizing the same function, those skilled in the art can provide one or more other function division modes. During the specific application, one or more function modules therein can be realized by adopting one function entity apparatus or unit, undeniably. Undeniably, the above conversion modes are all within the protection scope of the present application.

### Industrial Applicability

By adopting the above-mentioned technical solution, the problem that the service data and signaling issued by the base station cannot be received in time during entering the non-active time under the DRX mode can be solved, thus being able to promote the user experience and avoiding the handover call drop, etc. Therefore, the present invention has very strong industrial applicability.

## Claims

1. A discontinuous reception mode, DRX, processing method, comprising:
a user equipment, UE, in a DRX mode, detecting whether an event requiring to keep or enter an active time occurs (S601);
when the event is detected, the UE sending indication information of exiting the DRX mode and keeping or entering the active time to a base station (S602); and
the UE exiting the DRX mode and keeping or entering the active
time, and receiving data sent by the base station (S603); the method further comprising: while the UE sends the indication information, sending duration information of keeping or entering the active time to the base station; and resuming the time adjustment mode under the normal DRX mode after the duration (S604).

2. The processing method according to claim 1, wherein: the event comprises being in a handover area or being required to initiate an interactive service currently.

3. The processing method according to claim 1, wherein: the indication information or the duration information is sent, in a media access control message, MAC PDU, in a format of MAC control elements.

4. The processing method according to claim 1, further comprising: setting a mark for exiting the normal DRX mode while the UE sends the indication information, removing the mark after a timer is overtime; and keeping the active time when the mark exists, and adjusting time according to the normal DRX mode after the mark is removed.

5. A user equipment, UE, comprising a detection module (1201), a sending module (1202), a state adjustment module (1203), a data receiving module (1204) and a timer (1205), wherein, the detection module (1201) is configured to: in a discontinuous reception , DRX, mode, detect whether an event requiring to keep or enter an active time occurs;
the sending module (1202) is configured to: when the event is detected, send indication information of exiting the DRX mode and keeping or entering the active time to a base station; the time adjustment module is configured to: adjust a time and exit the DRX mode and keep or enter the active time therein after sending out the indication information; and
the data receiving module (1204) is configured to: receive data sent by the base station under the active time;
wherein,
the sending module (1202) is further configured to send duration information of keeping or entering the active time while sending the indication information to the base station; the timer (1205) is configured to: time according to the duration information; and
the time adjustment module is further configured to: resume the time adjustment mode under the normal DRX mode after the timer (1205) is overtime.

6. The UE according to claim 5, wherein the indication information or the duration information is sent in a format of Media Access Control, MAC, control elements in a media access control message.

7. The UE according to claim 5, wherein: the event comprises being in a handover area or being required to initiate an interactive service currently.

8. The UE according to claim 5, further comprising a mark processing module (1206), wherein,
the mark processing module (1206) is configured to: set a mark for exiting the normal DRX mode while the UE sends the indication information, and remove the mark after the timer (1205) is overtime; and
the time adjustment module is further configured to: keep the active time when the mark exists, and adjust the time according to the normal DRX mode after removing the mark.

9. A base station, comprising an information receiving module (1501) and a data issuing module (1502), wherein:
the information receiving module (1501) is configured to: receive indication information of exiting a discontinuous reception mode, DRX, and keeping or entering an active time sent by a user equipment ,UE, under the DRX mode; and
the data issuing module (1502) is configured to: issue data to the UE after receiving the indication information;
wherein: the data issuing module issues the data according to a normal DRX mode after a duration corresponding to duration information of keeping or entering the active time sent by the UE, wherein the duration information is received by the information receiving module.

10. The base station according to claim 9, wherein: the indication information or the duration information is sent, in a media access control message, MAC PDU, in a format of MAC control elements.

## Patentansprüche

1. Verarbeitungsverfahren für diskontinuierlichen Empfangsmodus (DRX, Discontinuous Reception), wobei das Verfahren umfasst:
Erfassen (S601), durch eine Teilnehmereinrichtung (UE, User Equipment) in einem DRX-Modus, ob ein Ereignis auftritt, bei dem eine aktive Zeit beibehalten oder in eine aktive Zeit eingetreten werden muss;
wenn das Ereignis erfasst wird, Senden (S602), durch die UE, von Hinweisinformationen über ein Verlassen des DRX-Modus und ein Beibehalten oder ein Eintreten in eine aktive Zeit, an eine Basisstation; und
Verlassen des DRX-Modus, und Beibehalten oder Eintreten in eine aktive Zeit, sowie Empfangen von von der Basisstation gesendeten Daten (S603), durch die UE;
wobei das Verfahren weiterhin umfasst: während die UE die Hinweisinformationen sendet, Senden von Informationen über die Dauer des Beibehaltens oder Eintretens in eine aktive Zeit, an die Basisstation; und
Wiederaufnehmen (S604) des Zeitanpassungsmodus unter dem normalen DRX-Modus, nach dem Ablauf der Dauer.

2. Verarbeitungsverfahren gemäß Anspruch 1, wobei das Ereignis umfasst: die Anwesenheit der UE in einem Weiterreichungsraum oder die Notwendigkeit für die UE, einen interaktiven Dienst in Gang zu setzen.

3. Verarbeitungsverfahren gemäß Anspruch 1, wobei: die Hinweisinformationen oder die Informationen über die Dauer in einer Medienzugriffssteuerungsnachricht (MAC PDU, Media Access Control) in einem Format von MAC-Steuerelementen gesendet werden.

4. Verarbeitungsverfahren gemäß Anspruch 1, das weiterhin umfasst: Setzen einer Markierung zum Verlassen des normalen DRX-Modus, während die UE die Hinweisinformationen sendet, Entfernen der Markierung, nach dem Ablauf der Dauer eines Timers; und Beibehalten der aktiven Zeit, wenn die Markierung vorhanden ist, und Anpassen der Zeit gemäß dem normalen DRX-Modus, nachdem die Markierung entfernt worden ist.

5. Teilnehmereinrichtung (UE, User Equipment), die umfasst: ein Erfassungsmodul (1201), ein Sendemodul (1202), ein Zustandsanpassungsmodul (1203), ein Datenempfangsmodul (1204) und einen Timer (1205), wobei:
das Erfassungsmodul (1201) konfiguriert ist zum: in einem diskontinuierlichen Empfangsmodus (DRX, Discontinuous Reception), Erfassen, ob ein Ereignis auftritt, bei dem eine aktive Zeit beibehalten oder in eine aktive Zeit eingetreten werden muss;
das Sendemodul (1202) konfiguriert ist zum: wenn das Ereignis erfasst wird, Senden von Hinweisinformationen über ein Verlassen des DRX-Modus und ein Beibehalten oder ein Eintreten in eine aktive Zeit, an eine Basisstation;
das Zeitanpassungsmodul konfiguriert ist zum: Anpassen einer Zeit und Verlassen des DRX-Modus sowie Beibehalten oder Eintreten in die aktive Zeit darin, nach dem Senden der Hinweisinformationen; und
das Datenempfangsmodul (1204) konfiguriert ist zum: Empfangen von von der Basisstation gesendeten Daten unter der aktiven Zeit;
wobei:
das Sendemodul (1202) weiterhin konfiguriert ist zum: Senden von Informationen über die Dauer des Beibehaltens oder Eintretens in die aktive Zeit, während die Hinweisinformationen an die Basisstation gesendet werden;
der Timer (1205) konfiguriert ist zum: Zeitmessen gemäß den Informationen über die Dauer; und
das Zeitanpassungsmodul weiterhin konfiguriert ist zum: Wiederaufnehmen des Zeitanpassungsmodus unter dem normalen DRX-Modus, nach dem Ablauf der Dauer des Timers (1205).

6. UE gemäß Anspruch 5, wobei: die Hinweisinformationen oder die Informationen über die Dauer in einem Format von MAC-Steuerelementen (MAC, Media Access Control) in einer Medienzugriffssteuerungsnachricht gesendet werden.

7. UE gemäß Anspruch 5, wobei das Ereignis umfasst: die Anwesenheit der UE in einem Weiterreichungsraum oder die Notwendigkeit für die UE, einen interaktiven Dienst in Gang zu setzen.

8. UE gemäß Anspruch 5, die weiterhin ein Markierungsverarbeitungsmodul (1206) umfasst, wobei:
das Markierungsverarbeitungsmodul (1206) konfiguriert ist zum: Setzen einer Markierung zum Verlassen des normalen DRX-Modus, während die UE die Hinweisinformationen sendet, und Entfernen der Markierung, nach dem Ablauf der Dauer des Timers (1205); und
das Zeitanpassungsmodul weiterhin konfiguriert ist zum: Beibehalten der aktiven Zeit, wenn die Markierung vorhanden ist, und Anpassen der Zeit gemäß dem normalen DRX-Modus, nachdem die Markierung entfernt worden ist.

9. Basisstation, die ein Informationenempfangsmodul (1501) und ein Datenausgabemodul (1502) umfasst, wobei:
das Informationenempfangsmodul (1501) konfiguriert ist zum: Empfangen von unter dem DRX-Modus gesendeten, von einer Teilnehmereinrichtung (UE, User Equipment) stammenden Hinweisinformationen über das Verlassen eines diskontinuierlichen Empfangsmodus (DRX, Discontinuous Reception) und das Beibehalten oder Eintreten in eine aktive Zeit; und das Datenausgabemodul (1502) konfiguriert ist zum: Ausgeben von Daten an die UE nach dem Empfang der Hinweisinformationen;
wobei: das Datenausgabemodul die Daten gemäß einem normalen DRX-Modus ausgibt, nach einer Dauer, die mit den von der UE gesendeten Informationen über die Dauer des Beibehaltens oder Eintretens in eine aktive Zeit übereinstimmen, wobei die Informationen über die Dauer an dem Empfangsmodul empfangen werden.

10. Basisstation gemäß Anspruch 9, wobei: die Hinweisinformationen oder die Informationen über die Dauer in einer Medienzugriffssteuerungsnachricht (MAC PDU, Media Access Control) in einem Format von MAC-Steuerelementen gesendet werden.

## Revendications

1. Procédé de traitement d'un mode de réception discontinue (DRX), comprenant :
la détection, par un équipement utilisateur (EU) dans un mode DRX, du fait qu'un événement nécessitant le maintien ou le passage à une période active s'est produit ou non (S601),
si l'événement est détecté, l'émission par l'EU, à destination d'une station de base, d'informations d'indication de sortie du mode DRX, et le maintien ou le passage à la période active (S602), et
la sortie du mode DRX par l'EU, et le maintien ou le passage à la période active, ainsi que la réception de données envoyées par la station de base (S603) ;
le procédé comprenant en outre : pendant que l'EU envoie les informations d'indication, l'envoi, à destination de la station de base, d'informations de durée concernant le maintien ou le passage à la période active, et
le retour au mode de réglage de période sous le mode DRX normal à l'issue de la durée (S604).

2. Procédé de traitement selon la revendication 1, dans lequel l'événement comprend la présence de l'équipement utilisateur dans une zone de transfert intercellulaire ou la nécessité pour celui-ci d'amorcer un service interactif.

3. Procédé de traitement selon la revendication 1, dans lequel les informations d'indication ou les informations de durée sont envoyées dans un message de contrôle d'accès au support (MAC PDU) sous un format d'éléments de contrôle MAC (Medium Access Control, contrôle d'accès au support).

4. Procédé de traitement selon la revendication 1, comprenant en outre la mise en place d'un repère visant à sortir du mode DRX normal pendant que l'EU envoie les informations d'indication, l'élimination du repère après qu'un compteur de temps est parvenu à expiration, et le maintien de la période active si le repère existe, ainsi que le réglage de la période conformément au mode DRX normal après l'élimination du repère.

5. Équipement utilisateur (EU) comprenant un module de détection (1201), un module d'émission (1202), un module de réglage d'état (1203), un module récepteur de données (1204) et un compteur de temps (1205), dans lequel :
le module de détection (1201) est conçu pour dans un mode de réception discontinue (DRX), détecter si un événement nécessitant le maintien ou le passage à une période active s'est produit ou non,
le module d'émission (1202) est conçu pour envoyer, à destination d'une station de base, en cas de détection de l'événement, des informations d'indication visant à sortir du mode DRX et à maintenir ou à passer à la période active,
le module de réglage de période est conçu pour régler une période et sortir du mode DRX, et maintenir ou passer à la période active dans celui-ci après l'envoi des informations d'indication, et
le module récepteur de données (1204) est conçu pour recevoir les données envoyées par la station de base pendant la période active ;
dans lequel :
le module d'émission (1202) est conçu en outre pour envoyer des informations de durée concernant le maintien ou le passage à la période active pendant l'envoi des informations d'indication à destination de la station de base,
le compteur de temps (1205) est conçu pour mesurer le temps conformément aux informations de durée, et
le module de réglage de période est conçu en outre pour retourner au mode de réglage de période sous le mode DRX normal après que le compteur de temps (1205) est parvenu à expiration.

6. Équipement utilisateur selon la revendication 5, dans lequel les informations d'indication ou les informations de durée sont envoyées sous un format d'éléments de contrôle MAC (Medium Access Control, contrôle d'accès au support) dans un message de contrôle d'accès au support.

7. Équipement utilisateur selon la revendication 5, dans lequel l'événement comprend la présence de l'équipement utilisateur dans une zone de transfert intercellulaire ou la nécessité pour celui-ci d'amorcer un service interactif.

8. Équipement utilisateur selon la revendication 5, comprenant en outre un module de traitement de repère (1206), dans lequel :
le module de traitement de repère (1206) est conçu pour mettre en place un repère visant à sortir du mode DRX normal pendant que l'EU envoie les informations d'indication, et éliminer le repère après que le compteur de temps (1205) est parvenu à expiration, et
le module de réglage de période est conçu en outre pour maintenir la période active si le repère existe, et régler la période conformément au mode DRX normal après l'élimination du repère.

9. Station de base, comprenant un module récepteur d'informations (1501) et un module émetteur de données (1502), dans laquelle :
le module de réception d'informations (1501) est conçu pour recevoir des informations d'indication concernant la sortie d'un mode de réception discontinue (DRX) et le maintien ou le passage à une période active, envoyées par un équipement utilisateur (EU), sous le mode DRX, et le module émetteur de données (1502) est conçu pour émettre des données à destination de l'EU après avoir reçu les informations d'indication ;
dans laquelle : le module émetteur de données émet les données conformément à un mode DRX normal après une durée correspondant aux informations de durée concernant le maintien ou le passage à une période active envoyées par l'EU, lesdites informations de durée étant reçues par le module de réception d'informations.

10. Station de base selon la revendication 9, dans laquelle les informations d'indication ou les informations de durée sont envoyées, dans un message de contrôle d'accès au support (MAC PDU) sous un format d'éléments de contrôle MAC (Medium Access Control, contrôle d'accès au support).
